# EUROPÄISCHE PATENTSCHRIFT

(11) **EP 0 463 237 B1**
(45) Veröffentlichungstag und Bekanntmachung des Hinweises auf die Patenterteilung: **13.04.1994**
(21) Anmeldenummer: 90125472.2
(22) Anmeldetag: 24.12.1990
(51) Int. Cl.: B23K 26/00, B23K 26/02

(54) **Verfahren und Vorrichtung zur Kantenverrundung von Federn**
Procedure of and device for smoothing off the edges of springs
Procédé et dispositif pour arrondir les arêtes de ressorts

(30) Priorität: 29.06.1990 DE 4020700
(43) Veröffentlichungstag der Anmeldung: 02.01.1992
(73) Patentinhaber: Hugo Kern und Liebers GmbH & Co. Platinen- und Federnfabrik, 78713 Schramberg (DE)
(72) Erfinder: Frietsch, Klaus, Dipl.-Ing. (FH), W-7230 Schramberg (DE)
(74) Vertreter: Patentanwälte Westphal, Buchner, Mussgnug Neunert, Göhring

(56) Entgegenhaltungen:
- EP-A- 0 109 509
- DE-A- 3 344 709
- DE-A- 3 719 816
- TECHNISCHE RUNDSCHAU. Bd. 80, Nr. 37, 9. September1988, BERN CH Seiten 21 - 32; J. STEFFEN: 'Der Laser in der Fertigungstechnik'

## Beschreibung

Die Erfindung betrifft ein Verfahren zur Bearbeitung von Federn der im Oberbegriff des Anspruchs 1 genannten Art.

Bei der Herstellung von Federn beispielsweise durch Stanzen entstehen Kanten in Form von Stanzgraten. Solche Kanten oder Stanzgrate müssen vor dem Einsatz der Federn verrundet werden. In herkömmlicher Weise werden die Kanten durch mechanisches Polieren bearbeitet.

Sind die Federn Teile von Mikroschleifkontakten, die für Präzisionspotentiometer, prellarme Schalter usw. verwendet werden, so muß ein ganzes Bündel von Federn, die in engen Abständen nebeneinander angeordnet sind, poliert werden. Dabei können etwa fünf oder mehr Federn pro Millimeter angeordnet sein.

Die Federn von Mikroschleifkontakten werden z. B. aus Bändern durch Präzisionsstanzen ausgestanzt. Die Bänder werden anschließend in Streifen mit der jeweils gewünschten Anzahl zusammenhängender Federn geschnitten. Zur nachfolgenden Entgratung werden die Streifen in herkömmlicher Weise derart zwischen Leisten eingespannt, daß die Stanzgrate an den Federenden mit Hilfe einer Polierscheibe unter Zuhilfenahme von Polierpaste nachbearbeitet werden können.

Allein das Einspannen, Bearbeiten und nachfolgende Reinigen ist sehr zeit- und arbeitsintensiv und damit teuer. Darüberhinaus ist auch eine kontinuierliche Fertigung der vom Band abgezogenen gestanzten Streifen nicht möglich. Auch ist das gemeinsame mechanische Polieren einer Mehrzahl von Federn eines Streifens nur von einer Seite aus möglich, so daß an den der Polierscheibe abgewandten Flächen dennoch scharfe Kanten bzw. Grate zurückbleiben können. Schließlich besteht durch die umständliche Behandlung die Gefahr, das einzelne Federn eines Streifens deformiert werden.

Aus DE 33 44 709 A1 ist ein Verfahren bekannt, bei welchem Schnittgrate z. B. an Bohrlochrändern metallischer Werkstücke mittels eines Laserstrahles abgeschmolzen und damit beseitigt werden. Bei diesem bekannten Verfahren wird der Laserstrahl auf den zu beseitigenden Grat fokussiert und mit Hilfe beweglicher Umlenkspiegel entsprechend dem Verlauf des Grates über diesen geführt. Dieses Verfahren wäre für die Behandlung des Schnittgrates bei Federn kaum praktikabel oder zumindest sehr aufwendig. Außerdem besteht wegen der Fokussierung des Laserstrahles auf den Grat die Gefahr, daß bei zu hoher Strahlungsintensität der Grat nicht nur verrundet sondern teilweise abgeschmolzen bzw. verdampft wird und damit der behandelte Werkstückrand beschädigt wird.

Aus DE 37 19 816 A1 ist es zwar bekannt, bei der Herstellung von Druckschraubenfedern mit planparallelen Stirnflächen, die senkrecht zur Federachse verlaufen, zum Abtrennen einen Laserstrahl zu verwenden, welcher die Federachse senkrecht kreuzt. Auch dieses Verfahren soll die Herstellung gratfreier Stirnflächen an den Federenden unterstützen. Dieses Ziel läßt sich grundsätzlich beim Laserschneiden nicht erreichen, da der Laserstrahl senkrecht zur Achse der Feder einseitig auftrifft und das verflüssigte Material mit Hilfe von Druckluft oder Sauerstoff ausgeblasen werden muß. Hierdurch bildet sich zwangsläufig auf der der Auftreffstelle des Laserstrahles gegenüberliegenden Seite ein Grat.

Der vorliegenden Erfindung liegt die Aufgabe zugrunde, das zuletzt erwähnte Verfahren so zu verbessern, daß mit möglichst geringem Aufwand eine Kantenverrundung von Federn in zeit- und kostensparender Weise möglich ist, wobei gleichzeitig eine hohe Oberflächenqualität der Federn gewährleistet sein soll.

Erfindungsgemäß wird diese Aufgabe durch das mit Anspruch 1 gekennzeichnete Verfahren gelöst, nach welchem mit vergleichsweise geringem Aufwand die Kontaktfläche eines Schleifkontaktes einer als Kontaktzunge dienenden Feder entgratet und geglättet werden kann. Entscheidend für die erfindungsgemäße Lösung ist, daß der nicht senkrecht zur Federachse sondern in Richtung der Federachse verlaufende Laserstrahl auf einen Punkt vor oder hinter der zu bearbeitenden Schnittfläche der Feder fokussiert wird, wodurch eine weiche Strahlung erzeugt und ein größerer Bereich der Schnittfläche erfaßt wird. Zur Beseitigung des Grates ist hierbei die Schnittfläche so weit zu erwärmen, daß sich die gewünschte Kantenverrundung durch Erweichen bzw. Aufschmelzen der Oberfläche einstellt, woraufhin der Erwärmungsvorgang abgebrochen wird.

Die Unteransprüche betreffen vorteilhafte Weiterbildungen des Verfahrens.

Die Bearbeitung mit Hilfe eines Laserstrahls erbringt gegenüber dem herkömmlichen Verfahren erhebliche Zeit- und Kostenvorteile. Da das Verfahren leicht automatisierbar ist, kann die Nachbearbeitung von Federn auch kontinuierlich bzw. taktweise durchgeführt werden. Wegen des kurzzeitigen Erweichens bzw. Anschmelzens der zu verrundenden Kanten an ihrer Oberfläche ergibt sich eine besonders weich verrundete, metallisch glänzende Oberfläche. Insbesondere wenn die Federn die Kontaktzungen von Mikroschleifkontakten darstellen, läßt sich eine besonders günstige Kontaktform mit einer leicht gerundeten breiten Kontaktfläche erzielen. Der Grat der Kantenverrundung läßt sich hierbei durch Intensität und Dauer der Laserbestrahlung beliebig steuern. Ferner ist eine hervorragende Oberflächengüte erzielbar, da keine Polierpaste verwendet wird und somit Schleifspuren und Rückstände von Polierpaste oder Reinigungsmitteln vermieden werden. Gleichfalls werden Beschädigungen der Federn vermieden, da das Verfahren berührungslos arbeitet.

Von Vorteil ist ferner, daß der defokussierte Laserstrahl, der eine "weiche" Strahlung liefert, nicht in die Tiefe des Materials eindringt und lediglich die Kante aufschmilzt. Hierdurch werden auch Ungenauigkeiten bei der Positionierung der Federn tolerierbar.

In weiter vorteilhafter Ausbildung des Verfahrens können Intensität und Dauer der Laserbestrahlung so gesteuert werden, daß die Federn an ihrer Oberfläche zumindest teilweise gehärtet werden. Die so erzielbare partielle Oberflächenhärtung ist natürlich von der Art des Federwerkstoffes, von seiner vorangegangenen Wärmebehandlung usw. abhängig.

Darüberhinaus ist es sogar möglich, der Oberfläche der Feder Legierungszusätze zuzuführen, die sich während der Bestrahlung mit dem Oberflächenmaterial verbinden, wodurch spezielle Eigenschaften wie eine besondere Härte, Verschleißfestigkeit oder gute elektrische Leitfähigkeit der Federoberfläche erzielbar sind. In vorteilhafter Weise kann die Zuführung der Legierungszusätze statt auf mechanischem Wege auch durch Abscheidung aus der Gasphase erfolgen.

Bei Durchführung des Verfahrens kann sowohl ein Pulslaser als auch ein Dauerstrichlaser verwendet werden. Während bei der Verwendung eines Pulslasers eine taktweise Bestrahlung der Federn erforderlich ist, können die Federn bei der Verwendung eines Dauerstrichlasers kontinuierlich durch den Laserstrahl hindurchgeführt werden.

Vorteile und Arbeitsweise des Verfahrens sind nachfolgend anhand der Zeichnung näher erläutert. Darin zeigen in schematischer Darstellung:
- Figur 1: eine Vorderansicht mehrerer Federn vor der Bearbeitung,
- Figur 1a: eine Seitenansicht einer Feder vor der Bearbeitung,
- Figur 2: eine Vorderansicht der Federn gemäß Figur 1 nach der Bearbeitung und
- Figur 2a: eine Seitenansicht der Feder gemäß Figur la nach der Bearbeitung.

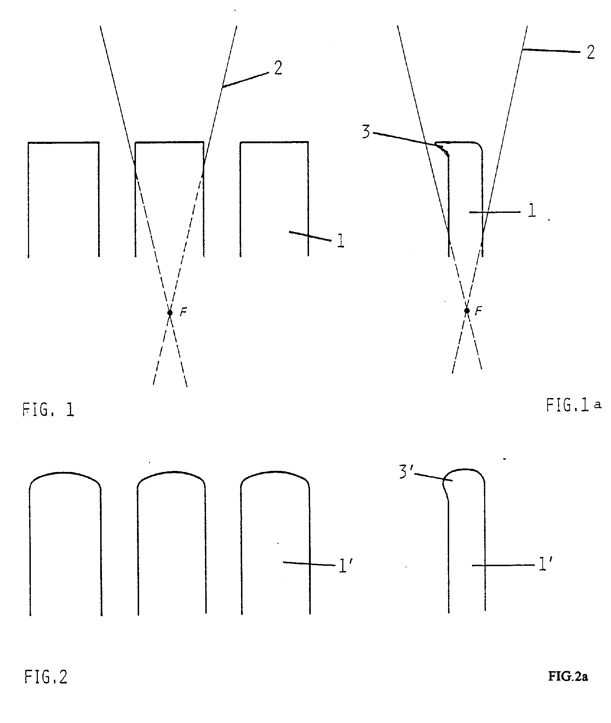

In Figur 1 sind drei Federn 1 schematisch dargestellt, die die Kontaktzungen eines Mikroschleifkontaktes darstellen. In der Seitenansicht gemäß Figur la ist am abstehenden Ende der Feder die zu verrundende Kante erkennbar, die als Stanzgrat 3 bei der Herstellung durch Stanzen entstanden ist.

Der durch die Ziffer 2 angedeutete Laserstrahl ist auf einen Punkt F hinter der jeweiligen zu bestrahlenden Oberfläche fokussiert. Durch den so defokussierten Laserstrahl ergibt sich eine "weiche" Strahlung, so daß lokale Überhitzungen vermieden werden. Das Ergebnis der Bearbeitung ist aus den Figuren 2 bzw. 2a ersichtlich. Die Enden der Federn 1' sind weich verrundet und aus dem ursprünglich scharfkantigen Stanzgrat ist in eine einseitig leicht nach außen vorstehende Wölbung 3' entstanden, die eine besonders günstige Form zur Verwendung als elektrische Kontaktfläche aufweist.

## Patentansprüche

1. Verfahren zur Bearbeitung von Federn, deren senkrecht zur Federachse verlaufende Schnittfläche mittels eines Laserstrahles erwärmt wird, dadurch gekennzeichnet, daß der Laserstrahl (2) zur Herstellung eines Schleifkontaktes der als Kontaktzunge dienenden Feder (1, 1') in Richtung der Federachse verläuft und auf einen Punkt (F) vor oder hinter der zu bearbeitenden Schnittfläche der Feder (1, 1') fokussiert wird und die Schnittfläche zur Beseitigung des Grates so weit erwärmt wird, daß sich die gewünschte Kantenverrundung durch Erweichen bzw. Aufschmelzen der Oberfläche einstellt, worauf der Erwärmungsvorgang abgebrochen wird.

2. Verfahren nach Anspruch 1, dadurch gekennzeichnet, daß Intensität und Dauer der Laserbestrahlung so gesteuert werden, daß die Schnittfläche der Feder (1, 1') zumindest teilweise gehärtet wird.

3. Verfahren nach Anspruch 1 oder 2, dadurch gekennzeichnet, daß der Schnittfläche der Feder (1, 1') Legierungszusätze während der Bestrahlung zugeführt werden.

4. Verfahren nach Anspruch 3, dadurch gekennzeichnet, daß die Legierungszusätze durch Abscheiden aus der Gasphase auf die bestrahlte Oberfläche aufgebracht werden.

5. Verfahren nach einem der vorhergehenden Ansprüche, dadurch gekennzeichnet, daß die Federn als Kontaktzungen von Mikroschleifkontakten ausgebildet sind.

6. Verfahren nach einem der vorhergehenden Ansprüche, dadurch gekennzeichnet, daß die Federn (1, 1') kontinuierlich oder taktweise durch den Laserstrahl (2) hindurchgeführt werden.

7. Verfahren nach einem der vorhergehenden Ansprüche, dadurch gekennzeichnet, daß zur Erzeugung des Laserstrahls (2) ein Pulslaser verwendet wird.

8. Verfahren nach einem der Ansprüche 1 bis 6, dadurch gekennzeichnet, daß zur Erzeugung des Laserstrahls (2) ein Dauerstrichlaser verwendet wird.

## Claims

1. A process for working springs, in which the cut edge extending perpendicular to the spring axis is heated by means of a laser beam,
**characterised in that** the laser beam (2) for producing a sliding contact of the spring (1, 1') used as a contact stud extends in the direction of the spring axis and is focused on a point (F) in front of or behind the cut edge of the spring (1, 1') to be worked and the cut edge is heated to remove the burr until the desired edge rounding is produced by the softening or melting of the surface, whereupon the heating operation is discontinued.

2. A process according to Claim 1,
**characterised in that** the intensity and duration of the laser radiation are controlled so that the cut edge of the springs (1, 1') is at least partly hardened.

3. A process according to Claim 1 or 2,
**characterised in that** alloying additions are supplied to the cut edge of the springs (1, 1') during laser radiation.

4. A process according to Claim 3,
**characterised in that** the alloying additions are applied to the radiated surface by precipitation from the gaseous phase.

5. A process according to one of the preceding Claims,
**characterised in that** the springs are constructed as contact studs of micro sliding contacts.

6. A process according to one of the preceding Claims,
**characterised in that** the springs (1,1') are passed through the laser beam (2) continuously or in cycles.

7. A process according to one of the preceding Claims,
**characterised in that** a pulsed laser is used to produce the laser beam (2).

8. A process according to one of Claims 1 to 6,
**characterised in that** a continuous wave laser is used to produce the laser beam (2).

## Revendications

1. Procédé d'usinage de ressorts par échauffement au moyen d'un rayonnement laser de la tranche du ressort perpendiculaire à son axe, caractérisé en ce que le rayon laser (2), afin de créer une surface de glissement sur le ressort (1, 1') servant de languette de contact, se déplace selon la direction de l'axe du ressort en étant focalisé sur un point (F) situé devant ou derrière la tranche du ressort (1, 1') dont il s'agit d'éliminer la bavure qu'elle porte, le chauffage de la tranche étant poursuivi jusqu'à l'arrondissement du bord par ramollissement ou fusion superficielle, et interrompu à ce moment.

2. Procédé selon la revendication 1, caractérisé en ce l'intensité et la durée du rayonnement laser sont pilotées de manière à durcir, au moins partiellement, la tranche du ressort (1, 1').

3. Procédé selon la revendication 1 ou 2, caractérisé en ce que des apports d'alliage sont faits sur la tranche des ressorts (1, 1') pendant l'irradiation.

4. Procédé selon la revendication 3, caractérisé en ce que les apports d'alliage sur la surface irradiée sont obtenus par séparation à partir d'une phase gazeuse.

5. Procédé selon l'une des revendications précédentes, caractérisé en ce que les ressorts sont des languettes de contact de microcontacts glissants.

6. Procédé selon l'une des revendications précédentes, caractérisé en ce que les ressorts (1, 1') sont traités en continu ou en discontinu, par le rayonnement laser (2).

7. Procédé selon l'une des revendications précédentes, caractérisé en ce que le rayonnement (2) est fourni par un laser à impulsions.

8. Procédé selon l'une des revendications 1 à 6, caractérisé en ce que le rayonnement (2) est fourni par un laser à émission continue.
